(19) **Europäisches Patentamt / European Patent Office / Office européen des brevets**

(11) **EP 4 717 647 A1**

(12) **EUROPÄISCHE PATENTANMELDUNG**

(43) Veröffentlichungstag:
01.04.2026 Patentblatt 2026/14

(21) Anmeldenummer: 24202591.4

(22) Anmeldetag: 25.09.2024

(51) Internationale Patentklassifikation (IPC):
*B65H 59/38* (2006.01)   *B65H 59/16* (2006.01)
*H01F 41/071* (2016.01)   *H01F 41/094* (2016.01)
*B65H 23/10* (2006.01)   *H01M 10/04* (2006.01)

(52) Gemeinsame Patentklassifikation (CPC):
**B65H 59/16; B65H 23/105; B65H 59/388;
H01F 41/071; H01F 41/094; H01M 10/0404;**
B65H 2301/414326; B65H 2515/32; B65H 2701/36

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft
80333 München (DE)**

(72) Erfinder:
• **Bitterolf, David
91056 Erlangen (DE)**
• **Münster, Rico
09221 Neukirchen / Erzgebirge (DE)**

(74) Vertreter: **Siemens Patent Attorneys
Postfach 22 16 34
80506 München (DE)**

(54) **VERFAHREN ZUM WICKELN EINES WICKELGUTES MITTELS EINER BREMSROLLE AUF EINEN WICKELKÖRPER MIT NICHT-KREISFÖRMIGEM QUERSCHNITT**

(57) Die Erfindung betrifft ein Verfahren zum Wickeln eines Wickelgutes (D) mittels einer Bremsrolle (B) auf einen Wickelkörper (WK) mit nicht-kreisförmigem Querschnitt zur Beeinflussung eines Zugkraftverlaufs des Wickelgutes (D), aufweisend die Schritte Ermitteln eines Drehmomentwertes mittels einer Drehmomentbilanz der Bremsrolle (B) abhängig von einer Wickelgutgeschwindigkeit und Vorgeben des ermittelten Drehmomentwertes für den Antrieb (Mb) der Bremsrolle (B).

FIG 2

EP 4 717 647 A1

# FIG 4

**Beschreibung**

Die Erfindung betrifft ein Verfahren zum Wickeln eines Wickelgutes mittels einer Bremsrolle auf einen Wickelkörper mit nicht-kreisförmigem Querschnitt zur Beeinflussung eines Zugkraftverlaufs des Wickelgutes.

Die vorliegende Erfindung betrifft den Bereich der Wickelmaschinen, insbesondere Maschinen zum Wickeln von Draht auf Wickelkörper mit nicht-kreisförmigem Querschnitt oder asymmetrischen Geometrien. Diese Maschinen werden üblicherweise in der Herstellung von Elektromotoren und Transformatoren eingesetzt, wo Draht mit möglichst konstanter Zugkraft auf Spulen gewickelt werden soll, um die Qualität und Effizienz der elektrischen Bauteile sicherzustellen. Neben dem Wickeln von Draht gibt es eine Vielzahl anderer Materialien, die auf ähnliche Weise gewickelt werden. Beispielsweise werden Folien oder Bänder, wie insbesondere Kunststofffolien oder Metallbänder oder Klebebänder, auf Wickelkörper gewickelt. Gleichmäßiges Wickeln stellt sicher, dass die Materialien bei der späteren Verarbeitung oder Nutzung keine Falten oder Beschädigungen aufweisen. Insbesondere für die Batteriezellfertigung werden Elektrodenbahnen auf rechteckige Körper gewickelt, die ebenfalls hohen Anforderungen an eine beim Wickeln konstant vorherrschende Zugspannung unterliegen. Auch bei Kompositmaterialien für die Herstellung von Verbundwerkstoffen oder Filamenten aus Kunststoffen wie PLA oder ABS, die in 3D-Druckern verwendet werden, ist ein Wickeln mit gleichmäßiger Zugspannung nötig, um Teile mit hoher Qualität erzeugen zu können. Auch beim Nadelwickeln kommen nicht-kreisförmige Spulengeometrien zum Einsatz und die aufwickelnde Kinematik muss dennoch den hohen Anforderungen an gleichmäßige Spannung beim Aufwickeln eines Drahtes genügen.

Bei herkömmlichen Drahtwickelmaschinen wird der Draht mit Hilfe einer Bremse auf einen Wickelkörper aufgewickelt. Die Bremse wird mit Momentenregelung betrieben und leistet ein konstantes Drehmoment entgegen der Drahtabwickelrichtung. Der Drehmomentsollwert ist konstant und entspricht der gewünschten Zugkraft. Bei einem nicht rotations-symmetrischen Wickelkörper und einer konstanten Drehzahl des Wickelkörpers ist jedoch die Drahtabwickelgeschwindigkeit nicht konstant und die Bremse wird beschleunigt und gebremst. Während einer Beschleunigungsphase wird der Draht daher gelängt, während einer Bremsphase wird der Draht gestaucht, bzw. ist vorrübergehend spannungsfrei, so dass insgesamt keine konstante Zugspannung anliegt.

Ferner ist es aus dem Stand der Technik bekannt, ein Drehzahlverlauf für die Bremse mit Hilfe eines geometrischen Modells des Wickelkörpers zu rechnen und zu steuern. Die Zugkraft resultiert aus einem Positionsoffset zwischen Bremse und Wickelkörper zusammen mit der Drahtsteifigkeit. Das Positionsoffset wird von einer überlagerten Kraftregelung geregelt. Jedoch ist dafür ein komplexes Modell erforderlich und das Vorgehen ist anfällig für Abweichungen zwischen Modell und Realität, was zu Zugkraftschwankungen führt, da jede kleine Abweichung der Position der Bremse auf Grund von Modellungenauigkeiten oder fehlender Reglerdynamik mit der Drahtsteifigkeit gewichtet wird.

Vor diesem Hintergrund ist es eine Aufgabe der vorliegenden Erfindung ein Wickeln eines Wickelgutes auf einen asymmetrischen Spulenkörper zu verbessern. Diese Aufgabe wird durch die Merkmale der unabhängigen Ansprüche gelöst. Vorteilhafte Ausgestaltungen sind in den abhängigen Ansprüchen angegeben.

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zum Wickeln eines Wickelgutes mittels einer Bremsrolle auf einen Wickelkörper mit nicht-kreisförmigem Querschnitt zur Beeinflussung eines Zugkraftverlaufs des Wickelgutes, aufweisend die folgenden Schritte:

- Ermitteln eines Drehmomentwertes mittels einer Drehmomentbilanz der Bremsrolle abhängig von einer Wickelgutgeschwindigkeit;
- Vorgeben des ermittelten Drehmomentwertes für den Antrieb der Bremsrolle.

Das Wickelgut, beispielsweise ein Draht, wird beispielsweise durch eine Bewegung des Wickelkörpers, hier eines Wickelkörpers mit nicht-kreisförmigem Querschnitt, beispielsweise einem annähernd rechteckigen Spulenkern, gezogen. Beispielsweise wird der Wickelkörper von mindestens einer Servo-Achse elektrisch angetrieben und gesteuert. Dabei soll das Wickelgut beispielsweise mittels einer Wickelmaschine mit definierter Kraft auf einen nichtkreisförmigen Gegenstand gewickelt werden.

Beispielsweise werden in Ausführungen Kinematiken oder Roboter eingesetzt, die einen mittels Hilfe der Bremse zugeführten Draht auf einen nicht-bewegten Wickelkörper aufwickeln. Beispielsweise werden Nadelwickler eingesetzt, die einen Draht auf einen rechteckigen Spulenkern wickeln.

Das Wickelgut wird über die Bremsrolle abgewickelt oder anders gesagt mittels einer Bremse dem Wickel-Prozess zur Verfügung gestellt. Auch die Bremsrolle wird typischerweise von einer Servo-Achse elektrisch angetrieben und gesteuert.

Je nach eingesetztem Wickelgut und je nach mechanischem Aufbau werden beispielsweise eine Warenbahn oder ein Draht zwischen der Bremse und dem Wickelkörper umgelenkt und geführt. Beispielsweise sind alle Umlenk- und Führungselementen fest und verursachen keine Änderung der Drahtlänge. In alternativen Ausgestaltungen verursachen Führungselemente die Wickelbewegung auf einen festen Wickelkörper.

Mit dem vorgeschlagenen Verfahren wird die Zugkraft, die auf das Wickelgut wirkt, in einem Bereich gehalten, in dem weder die Zugkraft zu gering wird, so dass das Wickelgut nicht mehr definiert in der Spule aufgewickelt würde, noch die Zugkraft zu groß wird, so dass das Wickelgut plastisch verformt und der Widerstand der Spule zu groß würde oder gar beispielsweise eine Isolationsschicht des Drahts beschädigt würde.

Es wird vielmehr je nach Wickelapplikation beispielsweise eine qualitativ hochwertige Spulenwicklung mit einem orthozyklischen Wickelbild erreicht, welches entscheidend für den Füllgrad und damit die Qualität einer Wicklung ist. Außerdem wird verhindert, dass die Spule ballig wird, was nachteilig für das Weiterverarbeiten, beispielsweise das Einfügen in einen Elektromotor wäre.

Dies wird durch die Vorgabe eines Drehmomentwertes am Antrieb der Bremsrolle erreicht, der aus der Drehmomentbilanz der Bremsrolle abgeleitet wird und unter Berücksichtigung der innerhalb jedes Wickelzyklus variierenden Geschwindigkeit des Wickelgutes ermittelt wird. Insbesondere ist die Wickelgutgeschwindigkeit eine Drahtgeschwindigkeit eines aufzuwickelnden Drahtes.

Gegenüber dem Stand der Technik bietet das vorgeschlagene Verfahren den Vorteil, dass keine aufwändigen Modellberechnungen zur Berechnung eines Drehzahlverlaufs für die Bremse auf Basis komplexer Modelle notwendig sind, um möglichst genau die Realität zu beschreiben, ohne diese direkt berücksichtigen zu können.

Die vorliegende Erfindung ermöglicht daher ein Wickeln mit einer genauen Übereinstimmung des Zugkraftverlaufs mit einem gewünschten Verlauf auch bei unrunden Wickelkörpern und hohen Drehzahlen.

Gemäß einer Ausgestaltung wird zum Vorgeben des ermittelten Drehmomentwertes eine Drehmomentkennlinie als Drehmomentsollwert und daraus abgeleitetem Stromsollwert einem Stromregler vorgegeben. Es wird somit ein Antriebsdrehmomentsollwert für den Bremsantrieb vorgegeben. Es wird die Bremsrolle mit einem Stromregler und zugehörigem Regelkreis betrieben und ein Drehmomentsollwert vorgegeben, der die variierenden Geschwindigkeiten des Wickelgutes berücksichtigt.

Gemäß einer Ausgestaltung wird zum Vorgeben des ermittelten Drehmomentwertes eine Drehmomentgrenze in dem Drehzahlregelkreis mit dem ermittelten Drehmomentwert als variablen Drehmomentgrenzwert angesteuert. Es wird eine Drehmomentgrenze eingerichtet, die verhindert, dass ein höheres oder im Falle von negativen Werten niedrigeres Drehmoment als das mittels des Grenzwertes eingestellte an der Bremsrolle auf das Wickelgut wirkt. In Ausführungen ist eine Ober- und Untergrenze vorgesehen, wobei ja nach mechanischem Aufbau der Wickelmaschine ein oberer oder unterer Grenzwert erreicht wird und entsprechend der obere oder untere Grenzwert mit dem ermittelten Wert belegt wird. Die Drehmomentgrenze variiert somit innerhalb jedes Wickelzyklus.

Gegenüber bekannten Drahtwickelmaschinen mit Momentenregelung beschleunigt die Bremse bei der vorgeschlagenen Vorgabe einer Drehmomentgrenze in dem Drehzahlregelkreis mittels der Drehmomentgrenze nicht unbegrenzt, so dass die Sicherheit erhöht wird.

Gemäß einer Ausgestaltung wird die Bremsrolle mit einer vorgebbaren Drehzahl angesteuert. Eine vorzugebende Drehzahl wird beispielsweise in einer Auslegung der Wickelmaschine ermittelt. Die gewählte Drehzahl sorgt dafür, dass der Draht die Drehmomentgrenze nach kurzer Anlaufphase erreicht. Die Drehmomentgrenze wird dann gesteuert und so gewählt, dass die Beschleunigungsphasen des Drahtes oder der Bremse kompensiert werden.

Gemäß einer Ausgestaltung wird die Drehzahl des Wickelkörpers aus einem Drehzahlverlauf vorgegeben. Bei Ausgestaltungen mit einem Drehzahlverlauf ist somit beispielsweise bei extremen Spulengeometrien ausgleichend für ausreichend zur Verfügung stehendes Wickelgut gesorgt.

Gemäß einer Ausgestaltung richtet sich die Drehzahl entgegen einer Abwickelrichtung, d.h. die Drehzahl würde ohne Antrieb des Wicklers dafür sorgen, dass der Draht wieder auf die Bremse aufgewickelt wird. So wird erreicht, dass ein Drehmomentsollwert der Bremse nach einiger Zeit eine fest vorgegebene Drehmomentgrenze, die abhängig von der Mechanik als Obergrenze oder Untergrenze eingestellt wurde, erreichen würde. Die Drehmomentgrenze wird gesteuert und so gewählt, dass die Beschleunigungsphasen des Drahtes oder der Bremse kompensiert werden. Die vorgegebene Drehzahl ist in der Phase vor Erreichen der Drehmomentgrenze und vor dem Betrieb in Drehmomentbegrenzung relevant.

Gemäß einer Ausgestaltung wird der Drehmomentgrenzwert mittels der Drehmomentbilanz mit entgegenwirkendem Zugkraft-Anteil und gleichwirkendem Trägheitsanteil ermittelt.

Der Trägheitsanteil weist eine Abhängigkeit von der Winkelbeschleunigung der Bremse und somit von der Drahtbeschleunigung und damit auch von der Drahtgeschwindigkeit auf. Der Trägheitsanteil weist insbesondere eine Abhängigkeit von einem effektiven Radius des Wickelkörpers auf. Der effektive Radius ist insbesondere ein stellungsabhängiger, lotrechter Abstand zwischen Wickelgut und Drehmitte des Wickelkörpers.

Der Zugkraftanteil ist dabei in gängigen Ausgestaltungen einer Drahtbremse als Produkt aus Zugkraft an der Bremse und Radius der Bremse gegeben. Das Produkt aus Trägheitsmoment und Winkelbeschleunigung der Bremse ist ein gängiger Trägheitsanteil. Die Winkelbeschleunigung der Bremse kann durch die Wickelgutbeschleunigung geteilt durch den Radius der Bremse ersetzt werden. Die Wickelgutbeschleunigung wird wiederum aus der Wickelgutgeschwindigkeit ermittelt.

Gemäß einer Ausgestaltung wird die Wickelgutgeschwindigkeit mittels geometrischer Angaben zum Wickelkörper ermittelt. Die Wickelgutgeschwindigkeit wird beispielsweise mit Hilfe eines geometrischen Modells gerechnet. Dabei gehen beispielsweise eine Umdrehungsgeschwindigkeit des Wickelkörpers und ein effektiver Radius ein, der sich aus der Geometrie des Wickelkörpers und einem Abstand des Wickelgutes von der Mitte des Wickelkörpers ergibt.

Gemäß einer Ausgestaltung wird die Wickelgutgeschwindigkeit mittels einer Testwicklung des Wickelkörpers mit Testbedingungen aufgezeichnet. Beispielsweise wird so für komplexe Spulengeometrien, wofür der effektive Radius nicht aus Benutzerangaben geschlossen gerechnet werden kann, der Verlauf des effektiven Radius über eine Testwicklung, beispielsweise eine oder mehrere Umdrehungen des Spulenkörpers, gelernt. Hierfür wird beispielsweise während einer langsamen Bewegung des Wickelkörpers, bei der Beschleunigungsvorgänge vernachlässigt werden können, und konstantem Drehmoment auf der Bremse die Bremsgeschwindigkeit als Trace aufgezeichnet.

Gemäß einer Ausgestaltung erfolgt die Ansteuerung der Drehmomentgrenze in Echtzeit. Somit wird der gewünschte Zugkraftverlauf möglichst schnell und damit möglichst genau erreicht.

Gemäß einer Ausgestaltung wird für den Zugkraft-Anteil eine Zugkraft oder ein Zugkraftverlauf vorgegeben. Es geht beispielsweise eine Soll-Zugkraft in eine Drehmomentbilanz ein, um daraus die Drehmomentgrenze zu ermitteln. Die gewünschte Zugkraft wird insbesondere abhängig von einem Material des Wickelgutes, einem Drahtdurchmesser etc. gewählt. Die Zugkraft ist beispielsweise parametrierbar und insbesondere je Anwendung fix gewählt.

Gemäß einer Ausgestaltung wird für den Trägheits-Anteil eine Trägheit vorgegeben, insbesondere aus einem CAD-System abgeleitet und vorgegeben, oder gemessen. So ist je nach Anwendungsfall eine einfach ermittelbare oder gut messbare Größe für die Trägheit verwendbar, die in die Drehmomentbilanz eingeht, um daraus die Drehmomentgrenze zu ermitteln.

Die Erfindung betrifft ferner eine Steuerungseinheit für eine Bremsrolle zum Wickeln eines Wickelgutes auf einen Wickelkörper ausgebildet und eingerichtet zur Durchführung des Verfahrens nach einem der oben beschriebenen Ausprägungen.

Die Erfindung betrifft ferner ein Computerprogramm, umfassend Befehle, die bei der Ausführung des Programms durch einen Computer diesen veranlassen, das Verfahren nach einem der obigen Ausprägungen auszuführen, wobei das Computerprogramm insbesondere auf einer virtuellen Steuerung zur Ausführung gebracht wird.

Die Erfindung wird nachfolgend anhand von Ausführungsbeispielen mit Hilfe der Figuren näher erläutert. Es zeigen:

Figur 1 eine schematische Darstellung einer Drahtwickelmaschine mit Steuerungskonzept gemäß dem Stand der Technik;

Figur 2 eine schematische Darstellung einer Drahtwickelmaschine mit Steuerungskonzept gemäß einem ersten Ausführungsbeispiel der Erfindung;

Figur 3 eine schematische Darstellung einer Geometrie eines unrunden Wickelkörpers mit relevanten Größen;

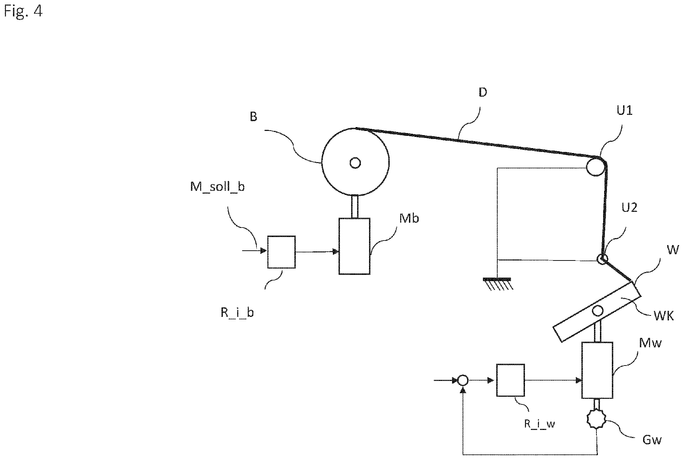

Figur 4 eine schematische Darstellung einer Drahtwickelmaschine mit Steuerungskonzept gemäß einem zweiten Ausführungsbeispiel der Erfindung;

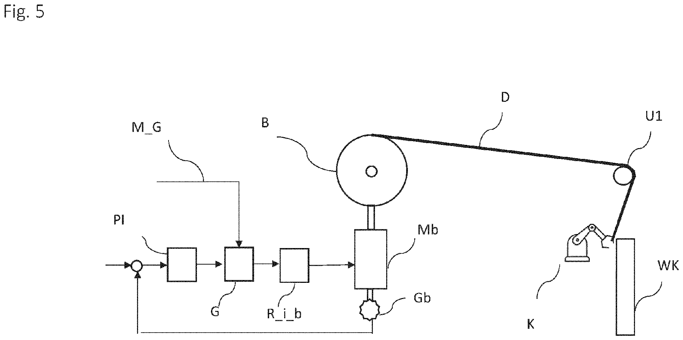

Figur 5 eine schematische Darstellung einer Drahtwickelmaschine mit Steuerungskonzept gemäß einem dritten Ausführungsbeispiel der Erfindung.

In den Figuren sind funktionsgleiche Elemente mit denselben Bezugszeichen versehen, sofern nichts anderes angegeben ist.

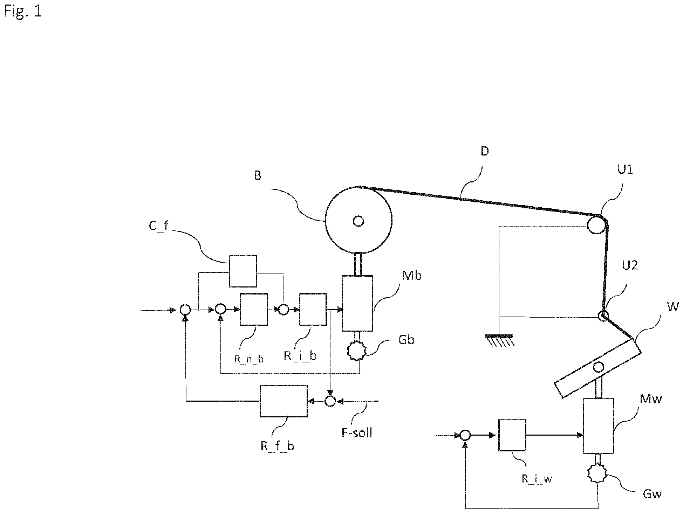

Figur 1 zeigt eine Drahtwickelmaschine nach dem Stand der Technik, bei welcher es darum geht, einen Kupferdraht D mit konstanter Zugkraft auf eine rechteckige Spule W zu wickeln. Es liegt der Spule W somit eine Geometrie eines unrunden Wickelkörpers WK zugrunde. In Figur 1 ist zu veranschaulicht, wie ein Draht D schlupffrei auf einer von einem Bremsmotor Mb angetriebenen Bremse B aufgewickelt und durch eine Bewegung der Bremse B dem Prozess zur Verfügung gestellt wird. Der Draht D wird wie abgebildet einmal an einer Umlenkrolle U1 umgelenkt und an einer Drahtführung U2 geführt. Die Spule W dreht mit konstanter Drehzahl, angetrieben durch den Wickelmotor Mw. Ein Geber am Wickler Gw sorgt für eine Rückführung in einen Stromregelkreis mit Stromregler $R\_i\_w$ zur Regelung einer konstanten Drehzahl am Wickler, hier der Spule W.

Mit Hilfe eines geometrischen Modells des Wickelkörpers WK wird ein Drehzahlverlauf für die Bremse B gerechnet und gesteuert. Ein Geber Gb gibt die Istdrehzahl aus. Die Zugkraft resultiert aus einem Positionsoffset zwischen Bremse B und Wickelkörper WK zusammen mit der Drahtsteifigkeit. Das Positionsoffset wird von einer überlagerten Kraftregelung geregelt.

Um die Zugkraft am Draht D auf einer Soll-Zugkraft F-soll zu halten wird einer Regelung des Bremsmotors Mb mit Stromregler $R\_i\_b$ und überlagertem Drehzahlregler $R\_n\_b$ eine Kraftregelung mit Kraftregler $R\_f\_b$ sowie Vorsteuerung $C\_f$ überlagert.

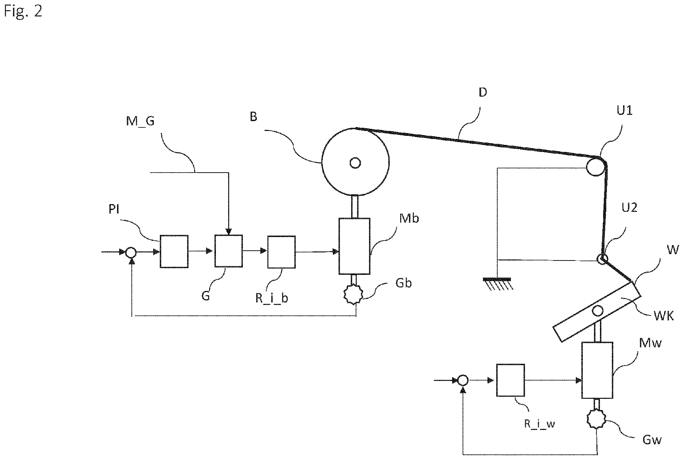

Gemäß einem ersten Ausführungsbeispiel wird die Bremse B mit konstanter Drehzahl angesteuert wird. Figur 2 veranschaulicht das Ausführungsbeispiel, wobei der Aufbau des Wicklers W mit der Umlenkrolle U1 sowie Drahtführung U2 identisch zu dem in Figur 1 gezeigten Aufbau ist. Die gewählte konstante Drehzahl der Bremse B richtet sich entgegen der Abwickelrichtung, d.h. die Drehzahl würde dafür sorgen, dass der Draht D wieder auf die Bremse B aufgewickelt würde. Dies sorgt dafür, dass der Drehmomentsollwert der Bremse B sehr schnell die Drehmomentgrenze erreicht. Die Drehmomentgrenze wird in Echtzeit gesteuert und so gewählt, dass die Beschleunigungsphasen des Drahtes D bzw. der Bremse B kompensiert werden.

Die zu kompensierende Beschleunigungskraft leitet sich aus der Drahtbeschleunigung ab. Die Drahtbeschleunigung erhält man aus der Drahtgeschwindigkeit und diese wird mit Hilfe eines geometrischen Modells gerechnet:

$$v_{Draht}(t) = r(\theta)\dot{\theta}$$

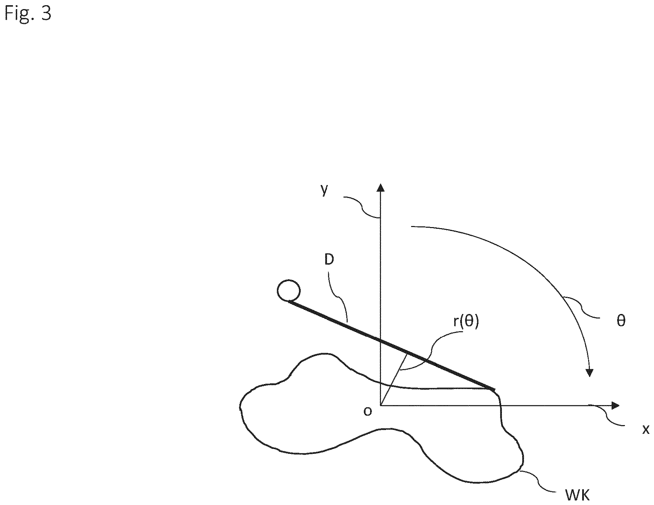

Wobei θ der Drehwinkel des Wickelkörpers WK und r(θ) der effektive Radius ist. Beide Größen werden anhand von Figur 3 erläutert.

In Figur 3 ist ein unrunder Wickelkörper WK gezeigt, um den ein Draht D gewickelt wird. Der Wickelkörper WK dreht sich um einen Punkt o, der zugleich den Ursprung eines zur Veranschaulichung eingezeichneten Koordinatensystems mit einer x-Achse und einer y-Achse in der Drehebene bildet. Der effektive Radius r(θ) ist der kürzeste Abstand zwischen der Drehmitte o des Wickelkörpers WK und dem Draht D. Bei einer einfachen Geometrie wie z.B. eines Rechtecks kann diese Funktion aus Benutzerangaben geschlossen gerechnet werden.

Aus der Drahtgeschwindigkeit wird die Drahtbeschleunigung gewonnen.

$$a_{Draht}(t) = r(\theta)\ddot{\theta} + \frac{dr}{d\theta}(\theta)\dot{\theta}^2$$

Für eine drehenden Bremse gilt folgende Drehmomentbilanz:

$$F_{zug}r_B = J_B\ddot{\theta}_B + M_{ist_B}$$

Wobei r_B der Radius der Bremse, F_Zug die auf den Draht wirkende Zugkraft, J_B die Trägheit der Bremse und $\ddot{\theta}_B$ die Winkelbeschleunigung der Bremse ist.

Die Winkelbeschleunigung der Bremse kann durch die Drahtbeschleunigung geteilt durch den Radius der Bremse ersetzt werden.

$$M_{ist_B} = F_{zug}r_B - \frac{J_B}{r_B}\left[r(\theta)\ddot{\theta} + \frac{dr}{d\theta}(\theta)\dot{\theta}^2\right]$$

Der so ermittelte Wert M_ist_B wird dann als Drehmomentgrenzwert M_G eingesetzt, wie in Figur 2 veranschaulicht. Da der Drehmomentgrenzwert M_G gesteuert wird und an der vorgesehenen Drehmomentgrenze G durchgängig erreicht wird, wird diese Begrenzung auf den Stromregler R_i_b als Sollwert ausgegeben. Es erfolgt die Umwandlung in einen Sollstrom, der dem Motor vorgegeben wird. Zudem ist beispielsweise ein PI-Regler PI im Drehzahlregelkreis vorgesehen.

Gemäß einem zweiten Ausführungsbeispiel wird statt der Drehmomentgrenze mit gesteuertem Grenzwert ein Drehmomentsollwert M_soll_b dem Stromregler R_i_b vorgegeben. Als Drehmomentsollwert M soll_b wird der Wert M_ist B, wie er im Zusammenhang mit dem ersten Ausführungsbeispiel beschrieben ermittelt wurde, verwendet. Es handelt sich insbesondere um einen Drehmomentsollwertverlauf, der sich in jedem Zyklus annähernd wiederholt.

Gemäß dem zweiten Ausführungsbeispiel werden Separator-Folien und Elektroden-Folien auf einen Kern gewickelt zur Herstellung einer Batteriezelle. Es ist nur eine der schichtweise übereinander zu wickelnden Folien abgebildet.

Gemäß einem dritten Ausführungsbeispiel der Erfindung kommt das beschriebene Konzept des mittels der Drehmomentbilanz ermittelten Drehmomentwertes für den Bremsantrieb in einer Wickelmaschine zum Einsatz, bei der der Wickelkörper WK einer Spule o.ä. nicht rotiert, sondern eine Kinematik K das Wickelgut auf den Wickelkörper WK aufwickelt. Dies kann beispielsweise bei flexibel austauschbaren Spulenkörpern vorteilhaft sein, bei welchen die Bewegung der Kinematik K die verschiedenen Geometrien ausgleichen kann.

**Patentansprüche**

1. Verfahren zum Wickeln eines Wickelgutes (D) mittels einer Bremsrolle (B) auf einen Wickelkörper (WK) mit nicht-kreisförmigem Querschnitt zur Beeinflussung eines Zugkraftverlaufs des Wickelgutes (D) aufweisend die folgenden Schritte:

   - Ermitteln eines Drehmomentwertes mittels einer Drehmomentbilanz der Bremsrolle (B) abhängig von einer Wickelgutgeschwindigkeit;
   - Vorgeben des ermittelten Drehmomentwertes für den Antrieb (Mb) der Bremsrolle (B).

2. Verfahren nach Anspruch 1, wobei zum Vorgeben des ermittelten Drehmomentwertes eine Drehmomentkennlinie als Drehmomentsollwert (M_soll_b) und daraus abgeleiteter Stromsollwert einem Stromregler vorgegeben wird.

3. Verfahren nach Anspruch 1, wobei zum Vorgeben des ermittelten Drehmomentwertes eine Drehmomentgrenze (G) in dem Drehzahlregelkreis mit dem ermittelten Drehmomentwert als variablen Drehmomentgrenzwert (M_G) angesteuert wird.

4. Verfahren nach Anspruch 3, wobei die Bremsrolle (B) mit einer vorgebbaren Drehzahl angesteuert wird.

5. Verfahren nach Anspruch 4, wobei die Drehzahl annähernd konstant vorgegeben wird oder die Drehzahl aus einem Drehzahlverlauf vorgegeben wird.

6. Verfahren nach Anspruch 4 oder 5, wobei sich die Drehzahl entgegen einer Abwickelrichtung richtet.

7. Verfahren nach einem der vorstehenden Ansprüche, wobei der Drehmomentwert mittels der Drehmomentbilanz mit entgegenwirkendem Zugkraft-Anteil und gleichwirkendem Trägheitsanteil ermittelt wird.

8. Verfahren nach einem der vorstehenden Ansprüche, wobei die Wickelgutgeschwindigkeit mittels geometrischer Angaben zum Wickelkörper (WK) ermittelt wird.

9. Verfahren nach einem der vorstehenden Ansprüche, wobei die Wickelgutgeschwindigkeit mittels einer Testwicklung des Wickelkörpers (WK) mit Testbedingungen aufgezeichnet wird.

10. Verfahren nach einem der Ansprüche 3 bis 9, wobei die Ansteuerung der Drehmomentgrenze (G) in Echtzeit erfolgt.

11. Verfahren nach einem der Ansprüche 7 bis 10, wobei für den Zugkraft-Anteil eine Zugkraft oder ein Zugkraftverlauf vorgegeben wird.

12. Verfahren nach einem der Ansprüche 7 bis 11, wobei für den Trägheits-Anteil eine Trägheit vorgegeben wird, insbesondere aus einem CAD-System abgeleitet und vorgegeben wird, oder gemessen wird.

13. Steuerungseinheit für eine Bremsrolle (B) zum Wickeln eines Wickelgutes (D) auf einen Wickelkörper (WK) ausgebildet und eingerichtet zur Durchführung des Verfahrens nach einem der vorstehenden Ansprüche.

14. Computerprogramm, umfassend Befehle, die bei der Ausführung des Programms durch einen Computer diesen veranlassen, das Verfahren nach einem der Ansprüche 1 bis 12 auszuführen, wobei das Computerprogramm insbesondere auf einer virtuellen Steuerung zur Ausführung gebracht wird.

Fig. 1

Fig. 2

Fig. 3

Fig. 4

Fig. 5

**EUROPÄISCHER RECHERCHENBERICHT**

Europäisches Patentamt
European Patent Office
Office européen des brevets

**Nummer der Anmeldung**

EP 24 20 2591

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KOHLER MARKUS ET AL: "Empirical Investigation and Feed-Forward Control of Wire Tension in Needle Winding Processes", 2024 IEEE 33RD INTERNATIONAL SYMPOSIUM ON INDUSTRIAL ELECTRONICS (ISIE), IEEE, 18. Juni 2024 (2024-06-18), Seiten 1-8, XP034645094, DOI: 10.1109/ISIE54533.2024.10595747 [gefunden am 2024-07-19] | 1,2,7-9, 11-14 | INV. B65H59/38 B65H59/16 H01F41/071 H01F41/094 B65H23/10 H01M10/04 |
| A | * das ganze Dokument * ----- | 3-6,10 | |
| A | SCHRODER DAVID ET AL: "Optimizing the Productivity of the Linear Winding of Rectangular Shaped Coils Using a Servo-based Wire Tensioning System", 2024 1ST INTERNATIONAL CONFERENCE ON PRODUCTION TECHNOLOGIES AND SYSTEMS FOR E-MOBILITY (EPTS), IEEE, 5. Juni 2024 (2024-06-05), Seiten 1-6, XP034637169, DOI: 10.1109/EPTS61482.2024.10586743 [gefunden am 2024-07-10] * das ganze Dokument * ----- | 4,5,8,11 | |
| | | | **RECHERCHIERTE SACHGEBIETE (IPC)** B65H H01F H01M |
| A | Siemens: "SIMATIC Wire Brake LWiBrake", , 1. Dezember 2022 (2022-12-01), XP093259273, Gefunden im Internet: URL:https://cache.industry.siemens.com/dl/files/325/109793325/att_1125081/v1/1097933 25_Docu_LWiBrake_SIMATIC_V2_0_0_en.pdf [gefunden am 2025-03-13] * das ganze Dokument * ----- | 4,5,11 | |
| A | JP H03 128869 A (NIPPON DENSO CO) 31. Mai 1991 (1991-05-31) * das ganze Dokument * ----- -/-- | 7,12 | |

Der vorliegende Recherchenbericht wurde für alle Patentansprüche erstellt

| Recherchenort | Abschlußdatum der Recherche | Prüfer |
|---|---|---|
| Den Haag | 18. März 2025 | Lemmen, René |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

**Nummer der Anmeldung**

EP 24 20 2591

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP S54 53259 A (TOA ELECTRIC CO LTD) 26. April 1979 (1979-04-26) * das ganze Dokument * ----- | 1-12 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 18. März 2025 | Lemmen, René |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
   Dokument

EPO FORM 1503 03.82 (P04C03)

**EP 4 717 647 A1**

## ANHANG ZUM EUROPÄISCHEN RECHERCHENBERICHT
## ÜBER DIE EUROPÄISCHE PATENTANMELDUNG NR.

EP 24 20 2591

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2025

| Im Recherchenbericht angeführtes Patentdokument | Datum der Veröffentlichung | Mitglied(er) der Patentfamilie | Datum der Veröffentlichung |
|---|---|---|---|
| JP H03128869 A | 31-05-1991 | JP 2617016 B2<br>JP H03128869 A<br>US 5109690 A | 04-06-1997<br>31-05-1991<br>05-05-1992 |
| JP S5453259 A | 26-04-1979 | JP S562778 B2<br>JP S5453259 A | 21-01-1981<br>26-04-1979 |

Für nähere Einzelheiten zu diesem Anhang : siehe Amtsblatt des Europäischen Patentamts, Nr.12/82